# EUROPEAN PATENT SPECIFICATION

(11) **EP 3 467 421 B1**
(45) Date of publication and mention of the grant of the patent: **30.12.2020**
(21) Application number: 18207169.6
(22) Date of filing: 29.06.2012
(51) Int. Cl.: F28D 9/00

(54) **METHODS AND DEVICES FOR HEATING OR COOLING VISCOUS MATERIALS**
VERFAHREN UND VORRICHTUNGEN ZUM HEIZEN ODER KÜHLEN VON VISKÖSEN MATERIALIEN
PROCÉDÉS ET DISPOSITIFS PERMETTANT DE CHAUFFER OU DE REFROIDIR DES MATÉRIAUX VISQUEUX

(30) Priority: 28.07.2011 US 201161574156 P
(43) Date of publication of application: 10.04.2019
(62) Document number(s) of the earlier application(s) in accordance with Art. 76 EPC: 12816828.3 / 2 737 272
(73) Proprietor: Société des Produits Nestlé S.A., 1800 Vevey (CH)
(72) Inventor: CULLY, Kevin J., Chesterfield, Missouri 63017 (US)
(74) Representative: Rupp, Christian

(56) References cited:
- US-A- 1 967 837
- US-A- 4 823 867
- US-A1- 2009 087 355
- US-A1- 2010 012 310
- US-A1- 2010 175 860
- US-B2- 7 736 686

## Description

### BACKGROUND OF THE INVENTION

### Field of the Invention

The invention relates generally to methods and devices for heating or cooling viscous materials and particularly to methods and devices for producing food products from meat emulsions.

### Description of Related Art

Methods for producing meat emulsions and foods from such emulsions are known in the food industry. Meat emulsions are widely used in the production of products such as bolognas, frankfurters, sausages, animal foods, and the like.

Typically, meat emulsion products are prepared by mixing, chopping, and emulsifying a mixture of raw meat materials such as lean skeletal beef and pork, meat by-products, ice, salt, spices, and curing salts. The resulting emulsion contains fine fat particles coated with protein from the meat ingredients. For a sausage product, the resultant meat emulsion is then stuffed into a suitable casing that serves as a processing mold. The casing is then heated at increasing temperatures, for example 55°C to 77°C, for extended periods, which may vary between 1 to 8 hours or more, depending on the volume of meat emulsion being processed.

The heating of the meat emulsion causes the protein contained therein to coagulate or to set solid. This thereby entraps the fat particles in the protein matrix thereby forming a firm meat emulsion product. The resultant meat emulsion product is a uniform, homogeneous mass that contains no discrete particles of meat and retains the shape of the casing when set.

To reduce the cost of certain food products to consumers, there has been a demand, in recent years, for meat emulsion products that resemble chunks or pieces of natural meat in appearance, texture, and physical structure, *i.e.*, meat analogs. Such products are used as a partial or complete replacement for more expensive natural meat chunks in food products such as stews, pot pies, casseroles, canned foods, and pet food products.

Chunky meat products are highly desirable in human and pet foods, both for aesthetic quality and consumer appeal. These chunky products provide a more economical product that attempts to simulate natural meat chunks in shape, appearance and texture. It is highly desirable that these products retain their shape, appearance, and texture when subjected to commercial canning and retorting procedures.

Efforts directed to providing such simulated natural meat chunks have included producing such products from vegetable protein sources, using extrusion-expansion techniques. Such products have met with some acceptance in the food industry, but they have been limited primarily to use as meat extenders. Products produced using vegetable protein sources in an extrusion-expansion procedure lack the appearance and texture of natural meat and therefore are generally not suitable as full substitutes for meat.

Similarly, meat extrusion products, based on meat protein, produced by conventional procedures have not been entirely satisfactory. These products are in the form of a uniform, homogeneous mass, and lack the structure, texture, and appearance of natural meat chunks. Therefore, these products are not suitable for use in applications in which the use of simulated meat chunks is desired.

The meat emulsion product is in the form of distinct chunks or pieces having a plurality of juxtaposed, manually separable meat-like layers resembling a chunk of natural meat in appearance, texture, and consistency. The meat emulsion chunks are suitable for use as a partial or complete replacement for more expensive natural meat chunks in both human foods and animal foods. They retain their integrity and shape when subjected to commercial canning and sterilization procedures such as those required in the production of retorted, high moisture food products.

Conventional concentric tube heat exchangers comprise cooling systems that obstruct the flow of viscous and/or fibrous products through the exchanger. This obstruction may change the property of the product, cause equipment clogging and reduce output. Similarly, increasingly long tubes are required to cool the product as needed. However, using multiple tube heat exchangers lead to increased clogging, uneven flow and low throughput between the tubes.

A heat exchanger having the features in the preamble of claim 1 is disclosed for example in US 2009/087355 A1.

### SUMMARY OF THE INVENTION

The invention generally relates to devices such as heat exchangers for making meat emulsion products and methods of using the devices. In an embodiment, the invention provides a device comprising a first plate, a second plate attached to the first plate, and a first spacer and a second spacer arranged between the first plate and the second plate. The first plate, the second plate, the first spacer and the second spacer define at least one passage for a product to pass through the device. The first plate and/or the second plate comprise energy exchanging capabilities. For example, the first plate and/or the second plate can be constructed and arranged to heat or cool (*e.g.,* via conduction or convection) the product in the passage.

In an embodiment, the first plate and the second plate define a temperature controlled zone. For example, the first plate and/or the second plate comprise a passage through a portion of the first plate and/or the second plate. The passage can comprise any suitable fluid that cools or heats the temperature controlled zone of the device.

In an embodiment, the first plate and the second plate define a plurality of temperature controlled zones. For example, the first plate and/or the second plate comprise a plurality of separate passages through individual portions of the first plate and/or the second plate. The passages can comprise a fluid that cools or heats the temperature controlled zones of the device.

In an embodiment, the passage comprises a gap between the first plate and the second plate ranging from about 3 cm to about 15 cm. The first spacer and the second spacer can be T-shaped. The first plate and the second plate can be sealed along the first spacer and the second spacer to withstand internal pressures in the passage from about 50 to about 1500 psi. The first plate and the second plate can be attached together by any suitable means such as, for example, one or more screws. In an embodiment, the device can comprise a first end plate defining an inlet and a second end plate defining an outlet that are attached to opposite ends of the first plate and the second plate.

In another embodiment, the invention provides a heat exchanger comprising a first pressure plate and a first energy exchanging plate attached to the first pressure plate, a second pressure plate and a second energy exchanging plate attached to the second pressure plate, the second pressure plate attached to the first pressure plate, and a first spacer and a second spacer arranged between the first energy exchanging plate and the second energy exchanging plate. The first energy exchanging plate, the second energy exchanging plate, the first spacer and the second spacer define at least one temperature controlled passage for product to pass through the heat exchanger.

In an embodiment, the first energy exchanging plate and/or the second energy exchanging plate comprises a passage through a portion of the first energy exchanging plate and/or the second energy exchanging plate. The passage can comprise any suitable fluid that cools or heats the temperature controlled zone of the heat exchanger.

In an embodiment, the first energy exchanging plate and the second energy exchanging plate define a plurality of temperature controlled zones. For example, the first energy exchanging plate and/or the second energy exchanging plate comprises a plurality of separate passages through individual portions of the first energy exchanging plate and/or the second energy exchanging plate that define the temperature controlled zones. The passages can comprise a fluid that cools or heats the temperature controlled zones of the heat exchanger.

In an embodiment, the passage comprises a gap between the first energy exchanging plate and the second energy exchanging plate ranging from about 3 cm to about 15 cm. The first spacer and the second spacer can be T-shaped. The first energy exchanging plate and the second energy exchanging plate can be sealed along the first spacer and the second spacer to withstand internal pressures in the product passage from about 50 to about 1500 psi.

In an embodiment, the heat exchanger further comprises a first end plate defining an inlet and a second end plate defining an outlet. The first end plate and the second end plate are attached to opposite ends of the first pressure plate and the second pressure plate. The heat exchanger can also comprise one or more transitioning gaskets attached to the inlet of the heat exchanger that transition from the opening of the inlet to the passage formed by the plates. The first pressure plate and the second pressure plate can be attached together by any suitable means such as, for example, one or more screws, bolts, or clamp screws.

In an alternative embodiment, the invention provides a method for making a food product. The method comprises introducing a food product into a heat exchanger and subjecting the product to a high pressure. The heat exchanger comprises a first plate, a second plate attached to the first plate, and a first spacer and a second spacer arranged between the first plate and the second plate. The first plate, the second plate, the first spacer and the second spacer define at least one temperature controlled passage for the food product to pass through the heat exchanger.

In an embodiment, the method comprises controlling a temperature of the heat exchanger by passing a fluid through at least one passage of a portion of at least one of the first plate and the second plate. For example, the first plate and the second plate can define a plurality of individual temperature controlled zones. The temperatures of individual temperature controlled zones can be controlled by passing a fluid through a plurality of separate passages through individual portions of the first plate and the second plate.

In yet another embodiment, the invention provides a method for making a meat emulsion product. The method comprises forming a meat emulsion containing protein and fat, comminuting and heating the meat emulsion, introducing the meat emulsion into a heat exchanger and subjecting the meat emulsion to a pressure of at least 70 psi. The heat exchanger comprises a first plate, a second plate attached to the first plate, and a first spacer and a second spacer arranged between the first plate and the second plate. The first plate, the second plate, the first spacer and the second spacer define at least one temperature controlled passage for the meat emulsion to pass through the heat exchanger. The heat emulsion is then discharged from the heat exchanger.

In an embodiment, the method can further comprise retorting the discharged meat emulsion product. In another embodiment, the method can further comprise drying or frying the discharged meat emulsion and forming a kibble-like piece from the meat emulsion.

An advantage of the invention is to provide an improved heat exchanger.

Another advantage of the invention is to provide an improved device for making a meat emulsion product.

Still another advantage of the invention is to provide an improved method of making a meat emulsion product.

Additional features and advantages are described herein, and will be apparent from, the following Detailed Description and the figures.

### BRIEF DESCRIPTION OF THE DRAWINGS

FIG. 1 illustrates a perspective view of the heat exchanger in an embodiment of the invention.
FIG. 2 illustrates a cross-section view II of the heat exchanger in FIG. 1.
FIG. 3 illustrates an exploded view of the heat exchanger in an embodiment of the invention.
FIG. 4 is a schematic of a process for manufacturing meat emulsion products using the apparatus in an embodiment of the invention.

### DETAILED DESCRIPTION OF THE INVENTION

The invention provides methods and devices suitable for heating or cooling viscous materials. In one embodiment, the methods and devices are suitable for producing food products from meat emulsions. More specifically, in an embodiment, the invention provides a high pressure plate heat exchanger useful for making meat emulsion products. For example, the heat exchanger permits the use of higher pressures and an increased product throughput. In addition, the heat exchanger can be designed to minimize or avoid obstructing the product as it passes through, which eliminates or reduces clogging within the heat exchanger.

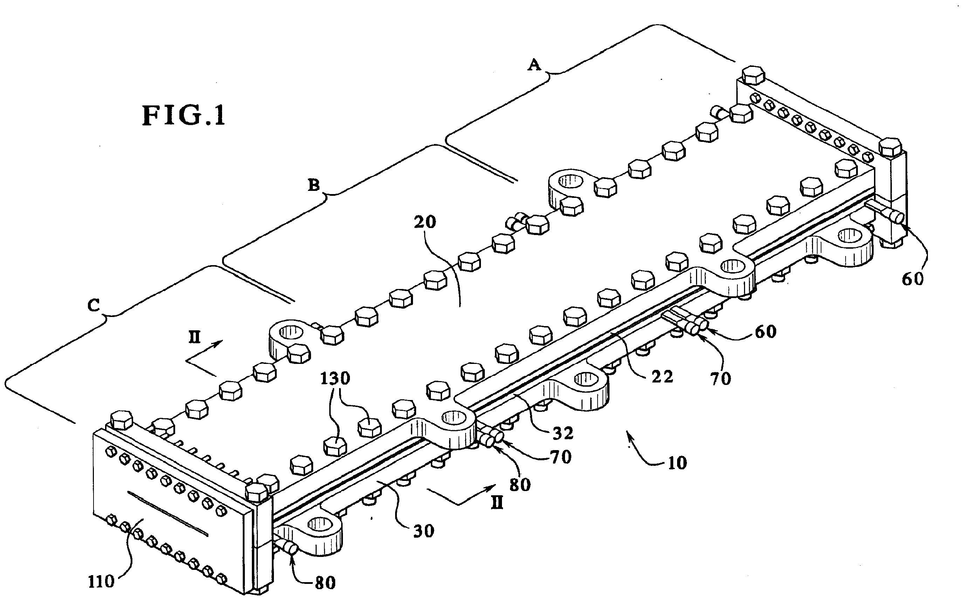

In a general embodiment illustrated in FIGS. 1-3, the invention provides a heat exchanger 10 comprising a first pressure plate 20 and a first energy exchanging plate 22 attached to the first pressure plate 20, a second pressure plate 30 and a second energy exchanging plate 32 attached to the second pressure plate 30, the second pressure plate attached to the first pressure plate. The heat exchanger 10 further comprises a first spacer 40 and a second spacer 42 arranged between the first energy exchanging plate 20 and the second energy exchanging plate 30. The first energy exchanging plate 22, the second energy exchanging plate 32, the first spacer 40 and the second spacer 42 define at least one temperature controlled passage 50 for product to pass through the heat exchanger 10.

The pressure plates 20 and 30, the energy exchanging plates 22 and 32 and the spacers 40 and 42 can be made out of any suitable material sufficient for their intended purposes. For example, the pressure plates 20 and 30 can comprise steel or other material capably to withstand the stresses related to elevated pressures and/or temperatures. The energy exchanging plates 22 and 32 can comprise steel or other material capably to withstand the stresses related to elevated pressures and/or temperatures. The spacers 40 and 42 can comprise steel or other material capably to withstand the stresses related to elevated pressures and/or temperatures.

In an embodiment, the first energy exchanging plate 22 and/or the second energy exchanging plate 32 comprises a passage 60 through any portion of the first energy exchanging plate 22 and/or the second energy exchanging plate 32. For example, the passage 60 can be constructed and arranged to pass through as much or as little of the energy exchanging plates as desired to affect temperature change of the plates. The passage 60 can also comprise an inlet and an outlet for fluid to pass through thereby facilitating heating or cooling of the product that is passing through the heat exchanger 10.

Any suitable fluid (*e.g.,* water) or gas at any desired temperature that cools or heats the temperature controlled zone of the heat exchanger 10 can be used. By controlling the temperature of the first energy exchanging plate 22 and/or the second energy exchanging plate 32, the heat exchanger can cool or heat the product on one or both sides thereby increasing the efficiency of the heat or cooling exchange. Alternatively or in addition to, the first energy exchanging plate 22 and/or the second energy exchanging plate 32 can utilize any other suitable heating or cooling mechanisms know to the skilled artisan.

As illustrated in FIG. 1, the first energy exchanging plate 22 and the second energy exchanging plate 32 can also define a plurality of temperature controlled zones A-C. For example, the first energy exchanging plate 22 and/or the second energy exchanging plate 32 comprises a plurality of separate passages 60, 70 and 80 through individual portions of the first energy exchanging plate and/or the second energy exchanging plate that define the temperature controlled zones A-C. The passages 60, 70 and 80 can comprise a separate fluid or gas that cools or heats the temperature controlled zones A-C of the heat exchanger 10.

Each of the temperature controlled zones A-C can be kept at a specific temperature, for example, by controlling the temperature and flowrate of the individual fluid or gas through the passages 60, 70 and 80. The temperature zones can be designed to increase or decrease in temperature as the product is passed through the heat exchanger. For example, during cooling of the meat emulsion, the temperatures zones can be set to cool the food in succession from one zone to another through the heat exchanger. Although three temperature controlled zones are illustrated, it should be appreciated that the heat exchanger 10 can comprise any suitable number of temperature controlled zones in alternative embodiments of the invention. Moreover, two or more heat exchangers of the invention can be placed sequentially to offer additional heating or cooling zones as necessary.

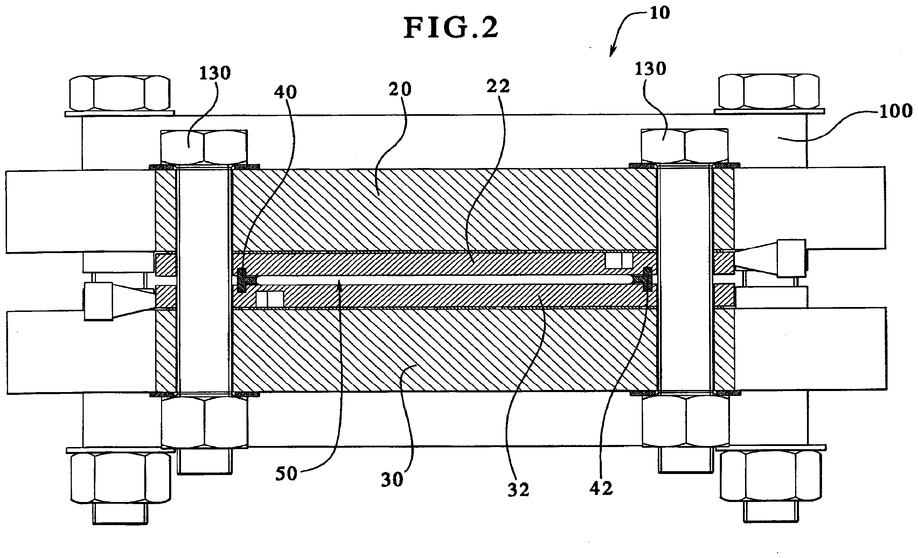

As shown in FIG. 2, the passage 50 comprises a gap between the first energy exchanging plate 22 and the second energy exchanging plate 32. The gap can comprise any suitable height. In an embodiment, the gap comprises a height ranging from about 3 cm to about 15 cm. As further shown in FIG. 2, in an embodiment, the first spacer 40 and the second spacer 42 can be T-shaped. It should be appreciated the spacers can be any suitable shape, for example, to provide a passage between the first energy exchanging plate 20 and the second energy exchanging plate 30. For example, the distance between the energy exchanging plates 22 and 32 and therefore the size of the cooling/heating zones can be adjustable by modifying the size of the spacer 40 and 42.

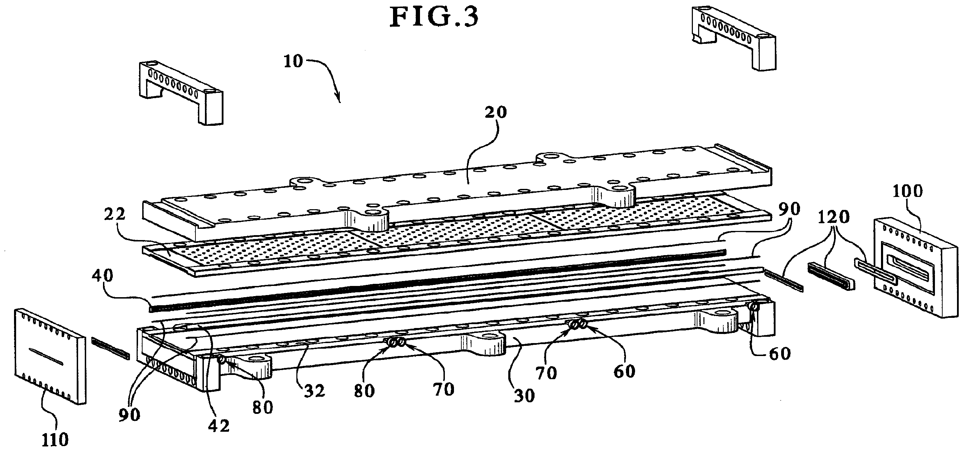

The first energy exchanging plate 22 and the second energy exchanging plate 32 can be sealed in any suitable manner along the first spacer and the second spacer to withstand pressures required to process the product as it passes through the device, *e.g.*, from about 50 to about 1500 psi. This prevents the product in the passage from permeating the heat exchanger (*e.g.,* from high internal pressures) as it passes through. For example, as shown in FIG. 3, in an embodiment, one or more long gaskets 90 can be placed along the spacers 40 and 42 to provide the seal. Preferably, the heat exchanger can be sealed to withstand positive pressures from about 50 to about 1500 psi and handle products with high viscosities *e*.*g*., 100,000 centipoises.

As illustrated in FIG. 3, in an embodiment, the heat exchanger 10 further comprises a first end plate 100 defining an inlet and a second end plate 110 defining an outlet. The first end plate 100 and the second end plate 110 can be attached to opposite ends of the first pressure plate 20 and the second pressure plate 30. The first end plate 100 and/or the second end plate 110 can also be used to attach two or more heat exchangers 10 together in a sequential fashion as discussed previously. For example, two or more heat exchangers can be brought together by attaching a first end plate of one heat exchanger to the second end plate of another heat exchanger.

The heat exchanger 10 can also comprise one or more transitioning gaskets 120 attached to the inlet of the heat exchanger 10 that transition from the opening of the inlet to the passage formed by the energy exchanging plates 22 and 32. The transiting gaskets 120 can provide, for example, a generally smooth transition (*e.g.,* by decreasing in size of the opening) as the product enters the heat exchanger's temperature controlled zones from a previous device or pipeline.

The first pressure plate 20 and the second pressure plate 30 can be attached and held together by any suitable means and at any suitable location. For example, first pressure plate 20 and the second pressure plate 30 can be held together by one or more bolts, screws and/or clamps 130 that pass through portions of the plates as illustrated in FIGS. 1-2.

In an alternative embodiment, the invention provides a device comprising a first plate, a second plate attached to the first plate, and a first spacer and a second spacer arranged between the first plate and the second plate. The first plate, the second plate, the first spacer and the second spacer define at least one passage for a product to pass through the device. The first plate and the second plate can each function as energy exchanging plates and pressure plates.

In this embodiment, the first plate and the second plate define a temperature controlled zone. The first plate and/or the second plate also comprise energy exchanging capabilities. Accordingly, the first plate and/or the second plate can be constructed and arranged to transfer heat or cold (*e.g.,* via conduction or convection) to or from the product in the passage. For example, the first plate and/or the second plate comprise a passage through any portion of the first plate and/or the second plate that a cooling or heating liquid passes through. Alternatively or in addition to, the first plate and/or the second plate can utilize any other suitable heating or cooling mechanisms know to the skilled artisan.

The first plate and the second plate can also define a plurality of temperature controlled zones utilizing a plurality of separate passages through individual portions of the first plate and/or the second plate. The passages can comprise any suitable fluid or gas that cools or heats the temperature controlled zones of the device.

The passage can comprise any size gap height between the first plate and the second plate such as, for example, ranging from about 3 cm to about 15 cm. The first spacer and the second spacer can be T-shaped. The first plate and the second plate can be sealed along the first spacer and the second spacer to withstand internal pressures in the passage from about 50 to about 1500 psi. The first plate and the second plate can be attached together by any suitable means such as, for example, one or more bolts, screws and/or clamps. In an embodiment, the device can comprise a first end plate defining an inlet and a second end plate defining an outlet that are attached to opposite ends of the first plate and the second plate.

In an alternative embodiment, the invention provides a method for making a food product. The method comprises introducing a meat emulsion into a heat exchanger and subjecting the meat emulsion to pressure. The heat exchanger comprises a first plate, a second plate attached to the first plate, and a first spacer and a second spacer arranged between the first plate and the second plate. The first plate, the second plate, the first spacer and the second spacer define at least one temperature controlled passage for the meat emulsion to pass through the heat exchanger.

The method can further comprise controlling a temperature of the heat exchanger by passing a fluid through at least one passage of a portion of at least one of the first plate and the second plate. For example, the first plate and the second plate can define a plurality of individual temperature controlled zones. The temperatures of individual temperature controlled zones can be controlled by passing a fluid through a plurality of separate passages through individual portions of the first plate and the second plate.

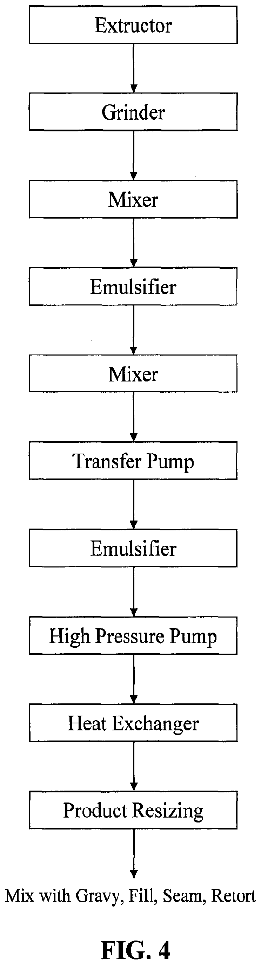

Figure 4 sets forth a flow chart illustrating generally the process steps for making a meat emulsion product utilizing the heat exchanger in embodiments of the invention. In a general embodiment, the method comprises forming a meat emulsion containing protein and fat, comminuting and heating the meat emulsion, introducing the meat emulsion into a heat exchanger and subjecting the meat emulsion to a pressure of at least 50 psi. The heat exchanger comprises a first plate, a second plate attached to the first plate, and a first spacer and a second spacer arranged between the first plate and the second plate. The first plate, the second plate, the first spacer and the second spacer define at least one temperature controlled passage for the meat emulsion to pass through the heat exchanger. The heat emulsion is then discharged from the heat exchanger.

The method can further comprise packaging and retorting the discharged meat emulsion product. In another embodiment, the method can further comprise drying or frying the discharged meat emulsion and forming a kibble-like piece from the meat emulsion.

The heat exchanger can be applied in the production of any product utilizing a heat exchanger. Generally, any viscous material such as plastics, confectionaries, doughs, polymers, sludges, and pastes can be processed using the methods and devices of the invention. Preferably, the heat exchanger can be applied to production of food products and/or meat emulsion products for pet and human consumption. The meat emulsion products can simulate any type of meat products including vegetable protein, poultry, beef, pork, and fish.

As set forth in detail below, generally the meat emulsion products can be produced by emulsifying meat, protein, water and various ingredients. The emulsion so produced is then run through a high speed emulsion mill, wherein the emulsion is rapidly heated to cause it to gel thermally. The heated emulsion is then discharged into a heat exchanger in an embodiment of the invention in which it solidifies into a striated meat-like structure.

As is set forth in detail below, a meat emulsion product can be produced that has improved fiber definition (visible, small diameter fibers) that affords the product a very realistic meat-like image. In this regard, the resultant meat emulsion product has fiber bundles or strands that afford the meat emulsion a very realistic muscle meat appearance. It is believed that for a resultant poultry meat emulsion product that the product of the invention has the appearance of tender slow cooked chicken or turkey that has been hand-pulled from the bone and covered in its own broth/juice. Pursuant to the invention, additionally, a meat emulsion product is produced that has irregular product shape and dimensions, and has a stronger bite/mouth feel than prior art products and is not pasty, mushy or brittle.

In preparing a meat emulsion product according to a method of the invention, a mixture of natural meat materials, including meat from mammals, fish, or fowl and/or meat by-products, having the requisite quality, ingredient cost and palatability, is formulated, ground, and emulsified. The meat and/or meat by-products used may be selected from a wide range of components, with the type and amount of meat material used in the formulation depending on a number of considerations, such as the intended use of the product, the desired flavor of the product, palatability, cost, availability of ingredients, and the like. Both meat (*i.e.,* skeletal tissue and non-skeletal muscle) from a variety of mammals, fowl and fish and/or meat by-products (*i.e.*, the non-rendered clean parts, other than meat, derived from slaughtered mammals, fowl, or fish) may be used as the meat material. Thus, the term meat material as used herein is understood to refer to non-dehydrated meat and/or meat by-products, including frozen materials.

If the product is intended for human consumption, any of the meats and meat byproducts used in the production of conventional meat emulsion products may be used in the invention, including meats such as whole-carcass beef and mutton, lean pork trim, beef shanks, veal, beef and pork cheek meat, and meat by-products such as lips, tripe, hearts, and tongues. If the product is intended for use as a pet food product, the meat mix may contain, in addition to the meat materials described above, any of the meat by-products which are approved for use in animal foods, such as mechanically deboned beef, chicken, or fish, beef and pork liver, lungs, kidney and the like. Typically the meat material is formulated to contain a maximum of about 15%, and preferably below about 10%, by weight of fat.

Additives which are used in conventional meat emulsion products may be mixed with the meat material and included in the meat emulsion of the invention. These additives include salt, spices, seasoning, sugar and the like in amounts sufficient to provide the product with desired taste characteristics. In addition, minor amounts of other dry ingredients such as, for example, functional ingredients, such as vitamins, antioxidants, prebiotics and minerals, flavors and the like, may also be added to the meat emulsion.

The meat emulsion may also include one or more dry proteinaceous materials, such as, for example, wheat gluten, soy flour, soy protein concentrate, soy protein isolate, egg albumin, and nonfat dry milk to improve emulsion stability and binding, impart flavor and reduce formulation costs. The inclusion of the dry proteinaceous materials in the meat emulsion is particularly advantageous in the production of product intended for use as a pet food. Dry proteinaceous material enables the processor to use meat materials having a protein to fat ratio and myosin to total protein ratio which would otherwise be of marginal acceptability for use in preparing meat emulsion products. If a dry, proteinaceous material is included in the meat emulsion, the amount used may vary from about 5% to about 35% by weight of the emulsion, depending on such factors as the intended use of the product, the quality of meat material used in the emulsion, ingredient cost considerations and the like. In a preferred embodiment, the level of dry proteinaceous material is between approximately 25 to about 35% by weight. Generally, as the fat content and/or moisture content of the meat material used are increased, the level of dry proteinaceous material in the emulsion is increased accordingly.

While the formulation of the meat emulsion may vary widely, the emulsion, including the dry proteinaceous material, should have a protein to fat ratio sufficient to form a firm meat emulsion product upon coagulation of the protein with no sign of emulsion instability. Further, the protein content of the emulsion must be such as will enable the emulsion, upon being heated to a temperature above the boiling point of water, to coagulate and form a firm emulsion product within a short period, that is, within about 5 minutes, and preferably within 3 minutes, after being heated to such a temperature. Thus, the meat materials and the additives, including the dry proteinaceous material (if used) are mixed together in proportions such that the meat material is present in an amount of from about 50% to 75% by weight, and preferably from about 60% to about 70% by weight of the meat emulsion. In a preferred embodiment, the starting ingredients for the meat emulsion comprise approximately 29 to about 31% by weight protein and approximately 4 to about 6% by weight fat. The resultant meat emulsion product should have a substantially similar profile to that of the starting ingredients. However, if gravy or broth is added to the product, this profile could change due to the moisture, protein and/or fat content of the gravy/broth.

In addition, the meat emulsion should be formulated to contain from about 45% to about 80% by weight moisture, with the moisture content preferably being controlled to from about 49% to about 53% by weight of the meat emulsion, *i.e.*, the meat materials and additives. The exact concentration of water in the emulsion will, of course, depend on the amount of protein and fat in the emulsion.

The meat mix selected for use is passed through a grinder to reduce the meat material into pieces of substantially uniform size. Generally it is preferred to pass the meat through a grinder equipped with a 1 cm or smaller grinding plate. While satisfactory results may be obtained by grinding the meat to a particle size larger than 1 cm, the use of such larger meat particles is generally not preferred. If the meat materials to be used are in a frozen condition, they must first be pre-broken or cut into pieces to reduce the size of the pieces going into the grinder. While the size of the pieces will depend on the size of the meat grinder intake, normally the frozen meat material is cut into pieces about 10 cm square.

After grinding, the mix of meat particles is conveyed to a mixing tank in which the meat is mixed until uniform. It preferably is heated to a temperature of from about 1°C to about 7°C, such as by hot water jacketing, steam injection, and the like to facilitate pumping of the meat mix. The uniform mix of ground meat particles is then comminuted under conditions that cause the meat material to emulsify and form a meat emulsion, in which the protein and water of the meat mixture form a matrix that encapsulates the fat globules. The meat material may be emulsified by any conventional procedure and equipment commonly used in meat emulsification, such as by using a mixer, blender, grinder, silent cutter chopper, emulsion mill and the like, which is capable of breaking up and dispersing the fat as globules in the protein slurry to form an emulsion.

Typically the temperature of the meat emulsion increases during the emulsification process. This heating of the meat emulsion is not objectionable as long as the temperature does not increase to the point that protein denaturation begins to occur at an undesirable rate at this stage of the process. The temperature of the meat mixture during emulsification should be maintained below about 49°C to minimize protein denaturing at this stage of the process. According to a preferred embodiment of the disclosure, the meat material is passed through an emulsion mill to emulsify the meat material with the emulsion being heated to a temperature from about 10°C to about 49°C, preferably from about 21°C to about 38°C.

The additives to be incorporated in the meat emulsion, including dry proteinaceous material (if used), may be added to the meat mix prior to emulsification. Alternatively, it is frequently preferable to incorporate the additives, particularly the dry proteinaceous material, in the meat mix after emulsification of the meat. Since the addition of the dry proteinaceous material increases the viscosity of the emulsion, better emulsification is obtained when the meat mix is emulsified before the addition of the dry proteinaceous material, which results in the formation of a viscous meat "dough."

This meat emulsion dough can be comminuted in turn, so as to increase the fineness of the emulsion and is rapidly heated to a temperature above the boiling point of water. At this temperature, the coagulation of protein in the emulsion proceeds so rapidly that the emulsion is set and a firm emulsion product formed within a very short period, *e.g.*, 20 seconds or less.

It has been found that rapidly heating the viscous meat emulsion to a temperature above the boiling point of water - generally from about 120°C to about 163°C, and preferably from about 140°C to about 154°C - will result in the protein in the emulsion coagulating to set the emulsion and form a firm emulsion product within about 5 minutes and typically from a few seconds to about 3 minutes after heating. At this stage in the process, the emulsion is under a pressure of approximately 100 to about 500 psi and preferably 200 to 350 psi. The high temperature, along with increased pressures will provide fiber definition to the product. It has been surprisingly found that the higher the product temperature and pressure the better the fiber development. By this is meant linear alignment with smaller, finer, long fibers.

Preferably, the emulsion is processed in equipment wherein the emulsion is heated to such elevated temperatures while it is being comminuted such as by mechanical heating and/or steam injection. According to a preferred embodiment, the viscous meat emulsion, which is at a temperature of from about 30°C to about 40°C, is pumped through an emulsion mill in which the meat emulsion is subjected to shearing to increase the fineness of the emulsion and almost simultaneously heat the emulsion to from about 120°C to about 163°C, preferably 140°C to about 154°C, through rapid mechanical heating and/or steam injection. Thus, the emulsion preferably is heated to such elevated temperatures in a period of less than about 60 seconds.

When the emulsion has been heated to such an elevated temperature in this manner, further significant shearing and cutting of the emulsion should be avoided. Control of the emulsion temperature within the desired range can be effected by adjusting such factors as the feed rate into the emulsion mill, the rotational speed of the emulsion mill and the like, and can readily be determined by those skilled in the art.

The hot meat emulsion, which is at a temperature above the boiling point of water and preferably in the range of from about 120°C to about 163°C, preferably about 140°C to about 154°C, is transferred with a positive displacement pump, *e.g.*, a gear or lobe pump, to a heat exchanger in an embodiment of the invention. The product is pumped at high pressures of 80 psi to about 1500 psi, preferably about 150 psi to about 450 psi, and most preferably 200 psi to about 350 psi into the heat exchanger.

At such high pressures, the process operates at or close to the emulsifier upper design limit pressure. For this reason, preferably a positive displacement pump (pressure limit of 1500 to beyond 2500 psi.) is close-coupled directly after the emulsifier. This allows the use of the emulsifier to develop the high temperature without the high pressure. The pressure will be developed after the positive displacement pump. This thereby reduces the pressures in the emulsifier housing to 60 to 100 psi.

The emulsion is retained in the heat exchanger at a pressure above the vapor pressure of the emulsion until the protein in the meat emulsion has coagulated sufficiently to set the emulsion and form a firm emulsion product, which retains its shape and structure when discharged from the heat exchanger. At such elevated temperature, protein coagulation proceeds at a very rapid rate.

While the time required for the hot emulsion to set sufficiently to form a firm product will depend on a number of factors, such as the temperature to which the emulsion is heated and the amount and type of protein in the emulsion, a residence time of between a few seconds to about 3 minutes, and usually from about 1 to about 1.5 minutes, in the heat exchanger is generally sufficient for the protein to coagulate sufficiently and form a firm emulsion product which will retain its shape, integrity, and physical characteristics. The residence time in the heat exchanger can be controlled by adjusting the flow rate of the emulsion to the heat exchanger and/or by adjusting the length of the heat exchanger.

The structure and design of the heat exchanger in embodiments of the invention helps to create the fiber structure of the product. In addition, the flow rate and differing pressures on the product help create the fiber structure. Preferably the heat exchanger is cooled. This allows the product to be cooled as it is forced through the heat exchanger.

The heat exchanger in embodiments of the invention comprises preferred designs that facilitate efficient cooling or heating to the center of the product. The cooling increases process stability and, similar to a reduction in cross-sectional area, can enhance fiber definition and alignment by causing variations in the product viscosity and flow rate. The set meat emulsion pieces discharged from the heat exchanger are in the form of long strips of products having a temperature of about 65°C to 100°C, and a moisture content of about 47% to 60%, with the pieces varying in size. Upon discharge from the heat exchanger, the pieces are rapidly cooled by evaporating cooling to a temperature in the range of 60°C to 93°C. If desired, suitable cutting means, such as a rotary cut-off knife, a water jet knife, a knife grid, or the like may be mounted at the discharge end of the heat exchanger to cut the product into pieces of a desired size, *e.g.,* from about 150 mm to about 350 mm. If desired, the product may be cut down the center to allow the product to cool more rapidly. The meat emulsion chunks thus formed have excellent integrity and strength and will retain their shape and fiber characteristics when subjected to commercial canning and retorting procedures such as those required in the production of canned foods having a high moisture content.

To enhance the fibrous image of the product, a set of compression rolls, which consists of two long lightly-textured cylinders (rolls) that spin at similar speeds, can be used prior to final product resizing or dicing. Product that is discharged from the heat exchanger is dropped into a narrow adjustable opening between the spinning cylinders, which open up, or partially separate or tear the fibers. It has been found that this incomplete form of shredding functions to emphasize the linear fibers.

The meat emulsion pieces discharged from the heat exchanger may be diced and conveyed to a dryer to remove a large portion of the moisture therefrom, and the dried product collected and stored. Moisture reduction may also be accomplished by exposing the pieces to dry heat, so that the resultant product pieces, although displaying fibers, have a generally kibble-like appearance. The dry heat may be provided by roasting, baking, grilling or frying the body. Preferably the body is flash fried. The duration would typically be less than one minute and preferably in the range from 15 to 35 seconds when the oil is in the temperature range from 150°C to 200°C.

Alternatively, in producing a "wet" product, the meat emulsion pieces may be conveyed from the heat exchanger directly to a canning operation in which chunks are filled into cans together with other ingredients (*e*.*g*., sauce, gravy, and the like) and the cans retorted. In either situation, the product can be resized if desired.

By way of example, in the production of a canned pet food product, a suitable gravy may be prepared by heating a mixture of water, starch, and condiments. The meat emulsion chunks and gravy are filled into cans in the desired proportions, the cans are vacuum sealed and are then retorted under time-temperature conditions sufficient to effect commercial sterilization. Conventional retorting procedures may be used. Typically, a retorting temperature of about 118°C to 121°C for approximately 40 to 90 minutes is satisfactory in producing a commercially sterile product.

It should be understood that various changes and modifications to the presently preferred embodiments described herein will be apparent to those skilled in the art. Such changes and modifications can be made without departing from the scope of the present invention as defined by the appended claims.

## Claims

1. A device (10) comprising:
a first plate (22);
a second plate (32) attached to the first plate (22), at least one of the first plate (22) and the second plate (32) comprising energy exchanging capabilities; and
a first spacer (40) and a second spacer (42) arranged between the first plate (22) and the second plate (32), wherein the first plate (22), the second plate (32), the first spacer (40) and the second spacer (42) define at least one passage (50) for a product to pass through the device (10), and **characterised by**
a first end plate (100) defining an inlet and a second end plate (110) defining an outlet attached to opposite ends of the first plate (22) and the second plate (32).

2. The device (10) of claim 1, wherein the first plate (22) and the second plate (32) define a temperature controlled zone (A-C), preferably wherein at least one of the first plate (22) and the second plate (32) comprises a passage (60) through a portion of the first plate (22) and the second plate (32), and preferably wherein the passage (60) comprises a fluid that cools or heats the temperature controlled zone (A-C) of the device (10).

3. The device (10) of any of claim 1 or 2, wherein the first plate (22) and the second plate (32) define a plurality of temperature controlled zones (A-C), preferably wherein at least one of the first plate (22) and the second plate (32) comprises a plurality of separate passages (60, 70, 80) through individual portions of the first plate (22) and the second plate (32), and preferably wherein the passages (60, 70, 80) comprise a fluid that cools or heats the temperature controlled zones (A-C) of the device (10).

4. The device (10) of any of claims 1 to 3, wherein the passage (50) comprises a gap between the first plate (22) and the second plate (32) ranging from about 3 cm to about 15 cm.

5. The device (10) of any of claims 1 to 4, wherein the first spacer (40) and the second spacer (42) are T-shaped.

6. The device (10) of any of claims 1 to 5, wherein the first plate (22) and the second plate (32) are sealed along the first spacer (40) and the second spacer (42) to withstand internal pressures in the passage from about 50 to about 1500 psi.

7. The device (10) of any of claims 1 to 6, wherein the first plate (22) and the second plate (32) are attached together by at least one bolt, screw, or clamp (130).

8. A heat exchanger comprising:
a device (10) according to any of claims 1 to 7, wherein the first plate (22) is a first energy exchanging plate, and wherein the second plate (32) is a second energy exchanging plate, wherein the heat exchanger further comprises:
a first pressure plate (20), wherein the first energy exchanging plate (22) is attached to the first pressure plate (20);
a second pressure plate (30), wherein the second energy exchanging plate (32) is attached to the second pressure plate (30), the second pressure plate (30) attached to the first pressure plate (20); and
the first spacer (40) and the second spacer (42) arranged between the first energy exchanging plate (22) and the second energy exchanging plate (32), wherein the first energy exchanging plate (22), the second energy exchanging plate (32), the first spacer (40) and the second spacer (42) define at least one temperature controlled passage (50) for a product to pass through the heat exchanger.

9. The heat exchanger of claim 8, wherein at least one of the first energy exchanging plate (22) and the second energy exchanging plate (32) comprises a passage (60) through a portion of the first energy exchanging plate (22) and the second energy exchanging plate (32), preferably wherein the passage (60) comprises a fluid that cools or heats the temperature controlled zone (A-C) of the heat exchanger.

10. The heat exchanger of any of claims 8 or 9, wherein the first energy exchanging plate (22) and the second energy exchanging plate (32) define a plurality of temperature controlled zones (A-C), preferably wherein at least one of the first energy exchanging plate (22) and the second energy exchanging plate (32) comprises a plurality of separate passages (60, 70, 80) through individual portions of the first energy exchanging plate (22) and the second energy exchanging plate (32) that define the temperature controlled zones (A-C), and preferably wherein the passages (60, 70, 80) comprise a fluid that cools or heats the temperature controlled zones (A-C) of the heat exchanger.

11. The heat exchanger of any of claims 8 to 10, wherein the passage (50) comprises a gap between the first energy exchanging plate (22) and the second energy exchanging plate (32) ranging from about 30 mm to about 150 mm.

12. The heat exchanger of any of claims 8 to 11, wherein the first spacer (40) and the second spacer (42) are T-shaped.

13. The heat exchanger of any of claims 8 to 12, wherein the first energy exchanging plate (22) and the second energy exchanging plate (32) are sealed along the first spacer (40) and the second spacer (42) to withstand internal pressures in the product passage (50) from about 50 to about 1500 psi.

14. The heat exchanger of any of claims 8 to 13 comprising at least one transitioning gasket (120) attached to the inlet of the heat exchanger.

15. The heat exchanger of any of claims 8 to 14, wherein the first pressure plate (20) and the second pressure plate (30) are attached together by at least one bolt, screw, or clamp (130).

16. The heat exchanger of any of claims 8 to 15, wherein the first end plate (100) and the second end plate (110) are attached to opposite ends of the first pressure plate (20) and the second pressure plate (30).

17. A method for making a food product comprising introducing a meat emulsion into a heat exchanger and subjecting the meat emulsion to a high pressure, the heat exchanger comprising a first plate (22), a second plate (32) attached to the first plate (22), and a first spacer (40) and a second spacer (42) arranged between the first plate (22) and the second plate (32), wherein the first plate (22), the second plate (32), the first spacer (40) and the second spacer (42) define at least one temperature controlled passage for the meat emulsion to pass through the heat exchanger, and wherein the heat exchanger comprises a first end plate (100) defining an inlet and a second end plate (110) defining an outlet attached to opposite ends of the first plate (22) and the second plate (32).

18. The method of claim 17 comprising controlling a temperature of the heat exchanger by passing a fluid through at least one passage (60) of a portion of at least one of the first plate (22) and the second plate (32).

19. The method of any of claims 17 or 18, wherein the first plate (22) and the second plate (32) define a plurality of individual temperature controlled zones (A-C), preferably comprising controlling temperatures of individual temperature controlled zones (A-C) by passing a fluid through a plurality of separate passages (60, 70, 80) through individual portions of the first plate (22) and the second plate (32).

20. The method of any of claims 17 to 19 further comprising:
forming the meat emulsion containing protein and fat;
comminuting and heating the meat emulsion;
introducing the meat emulsion into the heat exchanger and subjecting the meat emulsion to a pressure of at least 50 psi.; and
discharging the meat emulsion from the heat exchanger.

21. The method of claim 20 comprising packaging and retorting the discharged meat emulsion product.

22. The method of any of claims 20 and 21 comprising drying the discharged meat emulsion and forming a kibble-like piece from the meat emulsion.

## Patentansprüche

1. Vorrichtung (10), umfassend:
eine erste Platte (22);
eine zweite Platte (32), die an der ersten Platte (22) befestigt ist, wobei mindestens eine von der ersten Platte (22) und der zweiten Platte (32) Energietauschfähigkeiten umfasst; und
einen ersten Abstandshalter (40) und einen zweiten Abstandshalter (42), die zwischen der ersten Platte (22) und der zweiten Platte (32) angeordnet sind, wobei die erste Platte (22), die zweite Platte (32), der erste Abstandshalter (40) und der zweite Abstandshalter (42) mindestens einen Durchgang (50) definieren, durch den ein Produkt durch die Vorrichtung (10) laufen kann; und **gekennzeichnet durch**
eine erste Endplatte (100), die einen Einlass definiert, und eine zweite Endplatte (110), die einen Auslass definiert, befestigt an gegenüberliegenden Enden der ersten Platte (22) und der zweiten Platte (32).

2. Vorrichtung (10) nach Anspruch 1, wobei die erste Platte (22) und die zweite Platte (32) eine temperaturgesteuerte Zone (A-C) definieren, wobei vorzugsweise mindestens eine von der ersten Platte (22) und der zweiten Platte (32) einen Durchgang (60) durch einen Abschnitt der ersten Platte (22) und der zweiten Platte (32) umfasst und wobei vorzugsweise der Durchgang (60) ein Fluid umfasst, das die temperaturgesteuerte Zone (A-C) der Vorrichtung (10) kühlt oder erwärmt.

3. Vorrichtung (10) nach einem der Ansprüche 1 oder 2, wobei die erste Platte (22) und die zweite Platte (32) eine Vielzahl von temperaturgesteuerten Zonen (A-C) definieren, wobei vorzugsweise mindestens eine von der ersten Platte (22) und der zweiten Platte (32) eine Vielzahl von separaten Durchgängen (60, 70, 80) durch individuelle Abschnitte der ersten Platte (22) und der zweiten Platte (32) umfasst und wobei vorzugsweise die Durchgänge (60, 70, 80) ein Fluid umfassen, das die temperaturgesteuerten Zonen (A-C) der Vorrichtung (10) kühlt oder erwärmt.

4. Vorrichtung (10) nach einem der Ansprüche 1 bis 3, wobei der Durchgang (50) eine Lücke zwischen der ersten Platte (22) und der zweiten Platte (32) im Bereich von etwa 3 cm bis etwa 15 cm umfasst.

5. Vorrichtung (10) nach einem der Ansprüche 1 bis 4, wobei der erste Abstandshalter (40) und der zweite Abstandshalter (42) T-förmig sind.

6. Vorrichtung (10) nach einem der Ansprüche 1 bis 5, wobei die erste Platte (22) und die zweite Platte (32) entlang dem ersten Abstandshalter (40) und dem zweiten Abstandshalter (42) abgedichtet sind, um Innendrücken in dem Durchgang von etwa 50 bis etwa 1500 psi standzuhalten.

7. Vorrichtung (10) nach einem der Ansprüche 1 bis 6, wobei die erste Platte (22) und die zweite Platte (32) durch mindestens einen Bolzen, eine Schraube oder eine Klammer (130) miteinander verbunden sind.

8. Wärmetauscher, umfassend:
eine Vorrichtung (10) nach einem der Ansprüche 1 bis 7, wobei die erste Platte (22) eine erste Energieaustauschplatte ist und wobei die zweite Platte (32) eine zweite Energieaustauschplatte ist, wobei der Wärmetauscher ferner umfasst:
eine erste Druckplatte (20), wobei die erste Energieaustauschplatte (22) an der ersten Druckplatte (20) befestigt ist;
eine zweite Druckplatte (30), wobei die zweite Energieaustauschplatte (32) an der zweiten Druckplatte (30) befestigt ist, wobei die zweite Druckplatte (30) an der ersten Druckplatte (20) befestigt ist; und
den ersten Abstandshalter (40) und den zweiten Abstandshalter (42), die zwischen der ersten Energieaustauschplatte (22) und der zweiten Energieaustauschplatte (32) angeordnet sind, wobei die erste Energieaustauschplatte (22), die zweite Energieaustauschplatte (32), der erste Abstandshalter (40) und der zweite Abstandshalter (42) mindestens einen temperaturgesteuerten Durchgang (50) definieren, durch den ein Produkt durch den Wärmetauscher laufen kann.

9. Wärmetauscher nach Anspruch 8, wobei mindestens eine von der ersten Energieaustauschplatte (22) und der zweiten Energieaustauschplatte (32) einen Durchgang (60) durch einen Abschnitt der ersten Energieaustauschplatte (22) und der zweiten Energieaustauschplatte (32) umfasst, wobei der Durchgang (60) vorzugsweise ein Fluid umfasst, das die temperaturgesteuerte Zone (A-C) des Wärmetauschers kühlt oder erwärmt.

10. Wärmetauscher nach einem der Ansprüche 8 oder 9, wobei die erste Energieaustauschplatte (22) und die zweite Energieaustauschplatte (32) eine Vielzahl von temperaturgesteuerten Zonen (A-C) definieren, wobei vorzugsweise mindestens eine von der ersten Energieaustauschplatte (22) und der zweiten Energieaustauschplatte (32) eine Vielzahl von separaten Durchgängen (60, 70, 80) durch individuelle Abschnitte der ersten Energieaustauschplatte (22) und der zweiten Energieaustauschplatte (32) umfasst, welche die temperaturgesteuerten Zonen (A-C) definieren, und wobei vorzugsweise die Durchgänge (60, 70, 80) ein Fluid umfassen, das die temperaturgesteuerten Zonen (A-C) des Wärmetauschers kühlt oder erwärmt.

11. Wärmetauscher nach einem der Ansprüche 8 bis 10, wobei der Durchgang (50) eine Lücke zwischen der ersten Energieaustauschplatte (22) und der zweiten Energieaustauschplatte (32) im Bereich von etwa 30 mm bis etwa 150 mm umfasst.

12. Wärmetauscher nach einem der Ansprüche 8 bis 11, wobei der erste Abstandshalter (40) und der zweite Abstandshalter (42) T-förmig sind.

13. Wärmetauscher nach einem der Ansprüche 8 bis 12, wobei die erste Energieaustauschplatte (22) und die zweite Energieaustauschplatte (32) entlang dem ersten Abstandshalter (40) und dem zweiten Abstandshalter (42) abgedichtet sind, um Innendrücken in dem Produktdurchgang (50) von etwa 50 bis etwa 1500 psi standzuhalten.

14. Wärmetauscher nach einem der Ansprüche 8 bis 13, umfassend mindestens eine Übergangsdichtung (120), die am Einlass des Wärmetauschers befestigt ist.

15. Wärmetauscher nach einem der Ansprüche 8 bis 14, wobei die erste Druckplatte (20) und die zweite Druckplatte (30) durch mindestens einen Bolzen, eine Schraube oder eine Klammer (130) aneinander befestigt sind.

16. Wärmetauscher nach einem der Ansprüche 8 bis 15, wobei die erste Endplatte (100) und die zweite Endplatte (110) an gegenüberliegenden Enden der ersten Druckplatte (20) und der zweiten Druckplatte (30) befestigt sind.

17. Verfahren zum Herstellen eines Lebensmittelprodukts, umfassend das Einführen einer Fleischemulsion in einen Wärmetauscher und das Aussetzen der Fleischemulsion einem hohen Druck, wobei der Wärmetauscher eine erste Platte (22), eine zweite Platte (32), die an der ersten Platte (22) befestigt ist, und einen ersten Abstandshalter (40) und einen zweiten Abstandshalter (42), die zwischen der ersten Platte (22) und der zweiten Platte (32) angeordnet sind, umfasst, wobei die erste Platte (22), die zweite Platte (32), der erste Abstandshalter (40) und der zweite Abstandshalter (42) mindestens einen temperaturgesteuerten Durchgang definieren, durch den die Fleischemulsion durch den Wärmetauscher laufen kann, und wobei der Wärmetauscher eine erste Endplatte (100), die einen Einlass definiert, und eine zweite Endplatte (110), die einen Auslass definiert, befestigt an gegenüberliegenden Enden der ersten Platte (22) und der zweiten Platte (32), umfasst.

18. Verfahren nach Anspruch 17, umfassend das Steuern einer Temperatur des Wärmetauschers durch Leiten eines Fluids durch mindestens einen Durchgang (60) eines Abschnitts von mindestens einer der ersten Platte (22) und der zweiten Platte (32).

19. Verfahren nach einem der Ansprüche 17 oder 18, wobei die erste Platte (22) und die zweite Platte (32) eine Vielzahl von individuellen temperaturgesteuerten Zonen (A-C) definieren, vorzugsweise umfassend das Steuern der Temperaturen individueller temperaturgesteuerter Zonen (A-C) durch Leiten eines Fluids durch eine Vielzahl von separaten Durchgängen (60, 70, 80) durch individuelle Abschnitte der ersten Platte (22) und der zweiten Platte (32).

20. Verfahren nach einem der Ansprüche 17 bis 19, ferner umfassend:
Bilden der Fleischemulsion, die Protein und Fett enthält;
Zerkleinern und Erwärmen der Fleischemulsion;
Einführen der Fleischemulsion in den Wärmetauscher und Aussetzen der Fleischemulsion einem Druck von mindestens 50 psi; und
Abgeben der Fleischemulsion aus dem Wärmetauscher.

21. Verfahren nach Anspruch 20, umfassend das Verpacken und Retortieren des abgegebenen Fleischemulsionsprodukts.

22. Verfahren nach einem der Ansprüche 20 und 21, umfassend das Trocknen der abgegebenen Fleischemulsion und das Bilden eines Trockennahrungsstücks aus der Fleischemulsion.

## Revendications

1. Dispositif (10) comprenant :
une première plaque (22) ;
une deuxième plaque (32) fixée à la première plaque (22), au moins une de la première plaque (22), de la deuxième plaque (32) comprenant des capacités d'échange d'énergie ; et
une première entretoise (40) et une deuxième entretoise (42) disposées entre la première plaque (22) et la deuxième plaque (32), dans lequel la première plaque (22), la deuxième plaque (32), la première entretoise (40) et la deuxième entretoise (42) définissent au moins un premier passage (50) pour qu'un produit passe à travers le dispositif (10), et **caractérisé par**
une première plaque d'extrémité (100) définissant une entrée et une deuxième plaque d'extrémité (110) définissant une sortie fixée à des extrémités opposées de la première plaque (22) et de la deuxième plaque (32).

2. Dispositif (10) selon la revendication 1, dans lequel la première plaque (22) et la deuxième plaque (32) définissent une zone à température contrôlée (A-C), de préférence dans lequel au moins une de la première plaque (22) et de la deuxième plaque (32) comprend un passage (60) à travers une partie de la première plaque (22) et de la deuxième plaque (32), et de préférence dans lequel le passage (60) comprend un fluide qui refroidit ou chauffe la zone à température contrôlée (A-C) du dispositif (10).

3. Dispositif (10) selon l'une quelconque des revendications 1 ou 2, dans lequel la première plaque (22) et la deuxième plaque (32) définissent une pluralité de zones à température contrôlée (A-C), de préférence dans lequel au moins une de la première plaque (22) et de la deuxième plaque (32) comprend une pluralité de passages séparés (60, 70, 80) à travers des parties individuelles de la première plaque (22) et de la deuxième plaque (32), et de préférence dans lequel les passages (60, 70, 80) comprennent un fluide qui refroidit ou chauffe les zones à température contrôlée (A-C) du dispositif (10).

4. Dispositif (10) selon l'une quelconque des revendications 1 à 3, dans lequel le passage (50) comprend un espace entre la première plaque (22) et la deuxième plaque (32) compris entre environ 3 cm et environ 15 cm.

5. Dispositif (10) selon l'une quelconque des revendications 1 à 4, dans lequel la première entretoise (40) et la deuxième entretoise (42) sont en forme de T.

6. Dispositif (10) selon l'une quelconque des revendications 1 à 5, dans lequel la première plaque (22) et la deuxième plaque (32) sont scellées le long de la première entretoise (40) et de la deuxième entretoise (42) pour supporter les pressions internes dans le passage d'environ 50 à environ 1500 psi.

7. Dispositif (10) selon l'une quelconque des revendications 1 à 6, dans lequel la première plaque (22) et la deuxième plaque (32) sont fixées ensemble par au moins un boulon, une vis ou une pince (130).

8. Échangeur thermique comprenant :
un dispositif (10) selon l'une quelconque des revendications 1 à 7, dans lequel la première plaque (22) est une première plaque d'échange d'énergie, et dans lequel la deuxième plaque (32) est une deuxième plaque d'échange d'énergie, dans lequel l'échangeur de chaleur comprend en outre :
une première plaque de pression (20) dans lequel la première plaque d'échange d'énergie (22) est fixée à la première plaque de pression (20) ;
une deuxième plaque de pression (30), dans lequel la deuxième plaque d'échange d'énergie (32) est fixée à la deuxième plaque de pression (30), la deuxième plaque de pression (30) est fixée à la première plaque de pression (20) ; et
la première entretoise (40) et la deuxième entretoise (42) disposées entre la première plaque d'échange d'énergie (22) et la deuxième plaque d'échange d'énergie (32), dans lequel la première plaque d'échange d'énergie (22), la deuxième plaque d'échange d'énergie (32), la première entretoise (40) et la deuxième entretoise (42) définissent au moins un premier passage contrôlé en température (50) pour qu'un produit passe à travers l'échangeur thermique.

9. Échangeur thermique selon la revendication 8, dans lequel au moins une de la première plaque d'échange d'énergie (22) et de la deuxième plaque d'échange d'énergie (32) comprend un passage (60) à travers une partie de la première plaque d'échange d'énergie (22) et de la deuxième plaque d'échange d'énergie (32), dans lequel de préférence le passage (60) comprend un fluide qui refroidit ou chauffe la zone à température contrôlée (A-C) de l'échangeur thermique.

10. Échangeur thermique selon l'une quelconque des revendications 8 ou 9, dans lequel la première plaque d'échange d'énergie (22) et la deuxième plaque d'échange d'énergie (32) définissent une pluralité de zones contrôlées en température (A-C), de préférence dans lequel au moins l'une de la première plaque d'échange d'énergie (22) et de la deuxième plaque d'échange d'énergie (32) comprend une pluralité de passages séparés (60, 70, 80) à travers des parties individuelles de la première plaque d'échange d'énergie (22) et de la deuxième plaque d'échange d'énergie (32), qui définissent des zones à température contrôlée (A-C), et de préférence dans lequel les passages (60, 70, 80) comprennent un fluide qui refroidit ou chauffe les zones à température contrôlée (A-C) de l'échangeur thermique.

11. Échangeur thermique selon l'une quelconque des revendications 8 à 10, dans lequel le passage (50) comprend un espace entre la première plaque d'échange d'énergie (22) et la deuxième plaque d'échange d'énergie (32) compris entre environ 30 mm et environ 150 mm.

12. Échangeur thermique selon l'une quelconque des revendications 8 à 11, dans lequel la première entretoise (40) et la deuxième entretoise (42) sont en forme de T.

13. Échangeur thermique selon l'une quelconque des revendications 8 à 12, dans lequel la première plaque d'échange d'énergie (22) et la deuxième plaque d'échange d'énergie (32) sont scellées le long de la première entretoise (40) et de la deuxième entretoise (42) pour supporter des pressions internes dans le passage de produit (50) d'environ 50 à environ 1500 psi.

14. Échangeur thermique selon l'une quelconque des revendications 8 à 13, comprenant au moins un joint de transition (120) fixé à l'entrée de l'échangeur thermique.

15. Échangeur thermique selon l'une quelconque des revendications 8 à 14, dans lequel la première plaque de pression (20) et la deuxième plaque de pression (30) sont fixées ensemble par au moins un boulon, une vis ou une pince (130).

16. Échangeur thermique selon l'une quelconque des revendications 8 à 15, dans lequel la première plaque d'extrémité (100) et la deuxième plaque d'extrémité (110) sont attachées à des extrémités opposées de la première plaque de pression (20) et de la deuxième plaque de pression (30).

17. Procédé de fabrication d'un produit alimentaire comprenant l'introduction d'une émulsion de viande dans un échangeur thermique et en soumettant l'émulsion de viande à une pression élevée, l'échangeur thermique comprenant une première plaque (22), une deuxième plaque (32) attachée à la première plaque (22), et une première entretoise (40) et une deuxième entretoise (42) disposées entre la première plaque (22) et la deuxième plaque (32), dans lequel la première plaque (22), la deuxième plaque (32), la première entretoise (40) et la deuxième entretoise (42) définissent au moins un passage à température contrôlée pour faire passer l'émulsion de viande à travers l'échangeur thermique, et dans lequel l'échangeur thermique comprend une première plaque d'extrémité (100) définissant une entrée et une deuxième plaque d'extrémité (110) définissant une sortie fixées à des extrémités opposées de la première plaque (22) et de la deuxième plaque (32).

18. Procédé selon la revendication 17, comprenant la régulation d'une température de l'échangeur thermique en faisant passer un fluide à travers au moins un passage (60) d'une partie d'au moins l'une de la première plaque (22) et de la deuxième plaque (32).

19. Procédé selon l'une quelconque des revendications 17 ou 18, dans lequel la première plaque (22) et la deuxième plaque (32) définissent une pluralité de zones individuelles à température contrôlée (A-C), comprenant de préférence la régulation de températures de zones individuelles à température contrôlée (A-C) en faisant passer un fluide à travers une pluralité de passages séparés (60, 70, 80) à travers des parties individuelles de la première plaque (22) et de la deuxième plaque (32).

20. Procédé selon l'une quelconque des revendications 17 à 19, comprenant en outre :
la formation de l'émulsion de viande contenant des protéines et de la matière grasse ;
le broyage et le chauffage de l'émulsion de viande ;
l'introduction de l'émulsion de viande dans l'échangeur thermique et la soumission de l'émulsion de viande à une pression d'au moins 50 psi ; et
le déchargement de l'émulsion de viande de l'échangeur thermique.

21. Procédé selon la revendication 20, comprenant l'emballage et le passage en autoclave du produit d'émulsion de viande déchargé.

22. Procédé selon l'une quelconque des revendications 20 et 21, comprenant le séchage de l'émulsion de viande déchargée et la formation d'une pièce de type croquette à partir de l'émulsion de viande.
